# FASCICULE DE BREVET EUROPEEN

(11) **EP 0 680 015 B1**
(45) Date de publication et mention de la délivrance du brevet: **01.03.2000**
(21) Numéro de dépôt: 95410035.0
(22) Date de dépôt: 25.04.1995
(51) Int. Cl.: G06T 7/20

(54) **Dispositif d'alimentation en pixels d'une série d'opérateurs d'un circuit de compression d'images mobiles**
Pixelzuführgerät einer Kompressionsschaltungsoperatorsequenz sich bewegender Bilder
Pixel feeding device of an operator sequence of a mobile image compression circuit

(30) Priorité: 27.04.1994 FR 9405338
(43) Date de publication de la demande: 02.11.1995
(73) Titulaire: STMicroelectronics S.A., 94250 Gentilly (FR)
(72) Inventeur: Herluison, Jean-Claude, F-38660 Lumbin (FR)
(74) Mandataire: de Beaumont, Michel

(56) Documents cités:
- EP-A- 0 395 265
- IEEE TRANSACTIONS ON CIRCUITS AND SYSTEMS, vol. 36, no. 10, Octobre 1989 NEW YORK US, pages 1317-1325, XP 000085319 KUN-MIN YANG ET AL. 'A Family of VLSI Designs for the motion compensation block-matching algorithm'
- IEEE TRANSACTIONS ON CIRCUITS AND SYSTEMS FOR VIDEO TECHNOLOGY, vol. 4, no. 1, Février 1994 NEW YORK US, pages 18-27, XP 000439481 BOR-MIN WANG ET AL. 'Zero Waiting-Cycle Hierarchical Block Matching Algorithm and its Array Architectures'
- IEEE TRANSACTIONS ON SIGNAL PROCESSING, vol. 41, no. 2, Février 1993 NEW YORK US, pages 889-899, XP 000346029 YEU-SHEN JEHNG ET AL. 'An efficient and Simple Vlsi Tree architecture for motion estimation algorithms'

## Description

La présente invention se rapporte à un circuit de compression d'images mobiles, telles que des images de télévision. Elle concerne plus particulièrement l'alimentation en pixels d'opérateurs que comporte un tel circuit pour réaliser une estimation de mouvement de portions d'images, une portion d'une image courante étant comparée à son environnement dans l'image précédente.

Un circuit de ce type est utilisé pour coder les images afin qu'elles puissent être transmises dans le cadre d'une transmission d'images de télévision, en minimisant le nombre d'informations à transmettre. La compression qu'il réalise consiste, entre autres, à effectuer une estimation de mouvement entre des portions de deux images successives. Cette estimation de mouvement permet de coder, et donc transmettre, pour des portions d'une image courante, préexistantes dans l'image précédente, seulement des vecteurs de mouvement associés à ces portions. Chaque vecteur mouvement caractérise le déplacement entre une portion d'une image précédente et une portion correspondante de l'image courante. Pour ce faire, on applique à chaque pixel d'une image courante, un processus opératoire faisant intervenir, notamment, la valeur des pixels entourant le pixel considéré dans l'image précédente.

Les images, par exemple issues d'une caméra vidéo, sont découpées en portions d'image appelées "macroblocs". Ces macroblocs correspondent généralement à un découpage de l'image en carrés, chaque carré ayant une dimension de 16x16 pixels. Une image est stockée séquentiellement ligne par ligne dans une mémoire vidéo, et les pixels ainsi mémorisés sont extraits de cette mémoire vidéo par ensembles de pixels correspondant à des portions carrées de l'image. Ces ensembles de pixels, ou macro-blocs, sont rangés dans une mémoire cache, pour être utilisés par un processeur de calcul chargé, entre autres, de déterminer le vecteur de mouvement du macrobloc considéré.

Pour réaliser l'estimation de mouvement d'un macro-bloc, le processeur de calcul dispose, non seulement des pixels du macrobloc considéré de l'image courante, mais également de pixels entourant le macrobloc correspondant de l'image précédente. Le processeur de calcul traite séquentiellement chaque macrobloc de l'image courante, constituant un ensemble de valeurs courantes appelé "fenêtre courante", en utilisant, au moins partiellement, les pixels des macroblocs voisins de l'image précédente constituant un ensemble de valeurs de référence, appelé "fenêtre de référence". En pratique, une première mémoire cache contient une fenêtre courante, et une seconde mémoire cache contient une fenêtre de référence plus grande. Cette fenêtre de référence comprend, outre les pixels de la fenêtre courante dans l'image précédente, une partie des pixels des macroblocs de l'image précédente qui lui sont séquentiellement voisins dans toutes les directions.

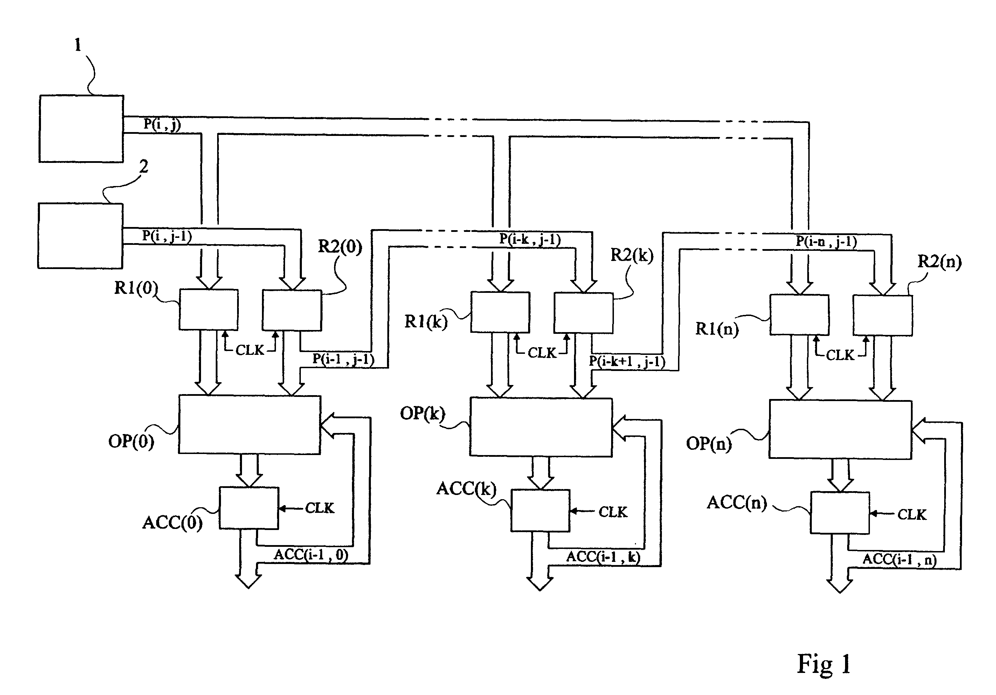

La figure 1 représente schématiquement un dispositif classique d'alimentation de "n+1" opérateurs OP(0), ..., OP(k), ...,OP(n) d'un processeur de calcul d'un circuit de compression d'images mobiles. Les opérateurs OP(k) sont organisés en architecture systolique et sont destinés à exécuter, pour chaque ligne de la fenêtre courante, des séquences de "n+1" opérations sur trois ensembles de valeurs, par ligne de la fenêtre de référence.

Chacun des "n+1" opérateurs OP(k) réalise une opération, par séquence d'opérations dite de rang "i" correspondant à un cycle d'une horloge CLK. Pour chaque pixel P(i,j) d'une image courante I(j), chaque opérateur OP(k) reçoit, un triplet de valeurs d'entrées. Ce triplet comprend, la valeur du pixel P(i,j), une valeur prise dans une ligne de la fenêtre de référence et contenant les "n+1" pixels P(i-k,j-1) précédant séquentiellement la position du pixel courant P(i,j) dans l'image précédente I(j-1), ainsi qu'une valeur dite d'accumulation. Cette valeur d'accumulation correspond au résultat fournit par l'opérateur considéré OP(k) au cours de la séquence précédente d'opérations de rang "i-1". Elle est contenue dans un registre d'accumulation, ou accumulateur, ACC(k).

Pour pouvoir effectuer une opération de rang "i", un premier pixel P(i,j), issu d'une première mémoire cache 1, est chargé dans un premier registre de travail Rl(k) de chaque opérateur OP(k). Un second pixel P(i,j-1), issu d'une seconde mémoire cache 2, est chargé dans un second registre de travail R2(0) de l'opérateur OP(0). Les seconds registres de travail R2(k) des autres opérateurs OP(1), ..., OP(k), ..., OP(n) sont chargés par la valeur P(i-k,j-1) de sortie du registre R2(k-1) de l'opérateur précédent OP(k-1). La valeur P(i-k,j-1) correspond à la valeur utilisée, par l'opérateur précédent OP(k-1), lors de la séquence précédente d'opérations, de rang "i-1", exécutée au cours de la période d'horloge précédente CLK(i-1). Les accumulateurs ACC(k) sont chargés par une valeur ACC(i-1,k) correspondant au résultat de l'opération effectuée par l'opérateur OP(k) lors de la séquence précédente de rang "i-1". Tous ces chargements s'effectuent, en pratique, au cours du cycle d'horloge de rang "i-1", pendant que les opérateurs exécutent la séquence de rang "i-1" qui précède l'exécution de la séquence d'opération de rang "i".

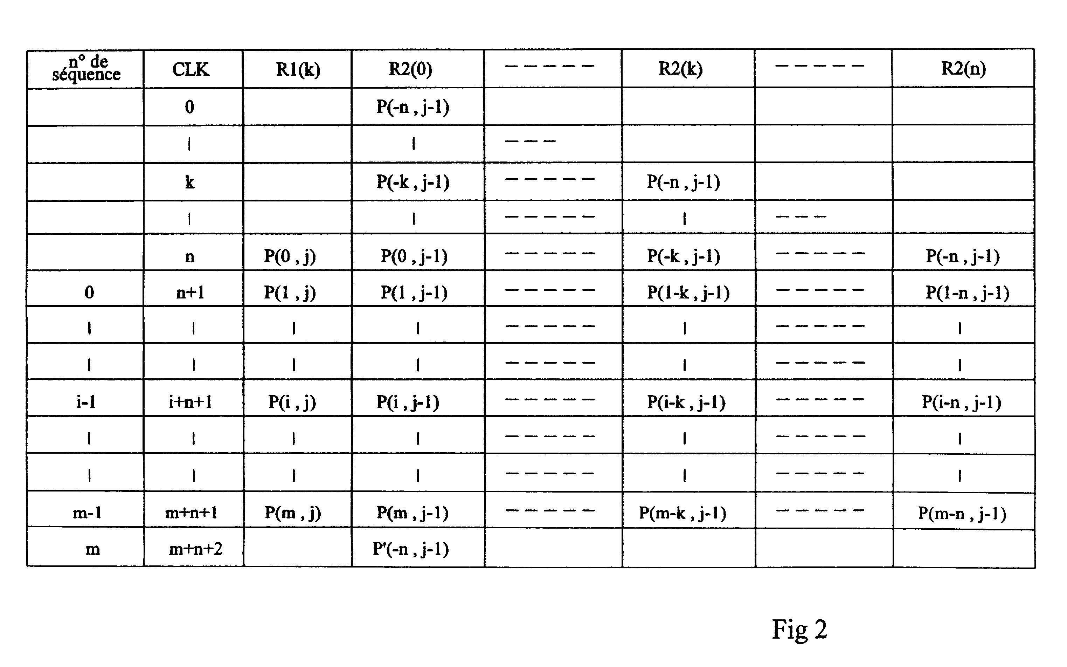

La figure 2 représente un tableau illustrant les valeurs d'entrées des registres R1(k) et R2(k) des opérateurs OP(k) à chaque période d'horloge CLK, pour le traitement d'une ligne de la fenêtre courante par rapport à un vecteur de ligne de la fenêtre de référence. Comme on peut le constater, le fonctionnement d'un tel dispositif impose de précharger, dans les registres R2(k), les pixels P(0,j-1),..., P(-k,j-1), ..., P(-n,j-1), avant le traitement de la ligne suivante. Les "n+1" premiers cycles d'horloge sont donc utilisés pour effectuer ce préchargement. "m+n+1" cycles d'horloge sont nécessaires pour effectuer "m+1" séquences de "n+1" opérations, le premier pixel P(-n,j-1), nécessaire pour le traitement de la ligne suivante, devant être chargé dans le registre R2(0) lors de la dernière séquence de rang "m" de la ligne courante.

On peut considérer que le rang "i" correspond à la colonne de position du pixel dans une ligne du macrobloc considéré de l'image courante I(j), la largeur d'un macrobloc déterminant le nombre "m+1" de séquences. Le rang "k" correspond à la position du pixel de l'image précédente I(j-1) servant de référence, le nombre "n+1" correspondant au nombre de pixels de référence avec lesquels un pixel P(i,j) de l'image courante I(j) doit subir une opération au cours d'une séquence.

En pratique, l'opération par rapport à une ligne de la fenêtre de référence s'effectue, pour un pixel donné de la fenêtre courante, en deux séquences. Une ligne de la fenêtre de référence est divisée en deux vecteurs de vingt-quatre (m+n+2) pixels pour contenir, pour chaque pixel courant, respectivement, les huit pixels précédant et suivant, séquentiellement sur la ligne, ce pixel courant dans l'image précédente. De plus un pixel doit subir une opération par rapport aux valeurs de huit pixels qui précédent et suivent séquentiellement sa position dans l'image précédente, dans toutes les directions. Ainsi, pour une ligne de pixels donnée de la fenêtre courante, le traitement est répété sur trente-deux vecteurs de lignes, correspondant à seize lignes de la fenêtre de référence. Le préchargement des "8" pixels P(0,j-1), ..., P(-k,j-1), ..., P(-8,j-1) doit donc être effectué seize fois par ligne du macrobloc constituant la fenêtre courante, pour le traitement de cette ligne par rapport aux premiers vecteurs de la fenêtre de référence.

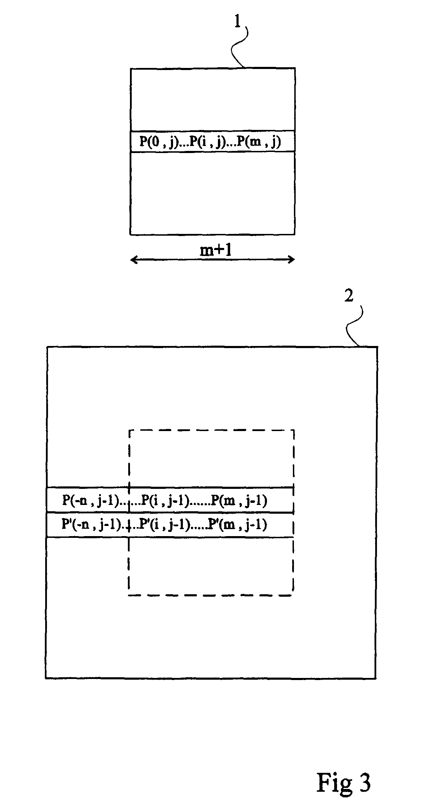

Ceci est illustré par la figure 3 qui représente schématiquement le contenu des mémoires 1 et 2. La mémoire cache 1 contient la fenêtre courante correspondant à un macrobloc de l'image courante I(j), soit "m+1" lignes de "m+1" pixels P(0,j), ..., P(i,j), ..., P(m,j). La mémoire cache 2 contient la fenêtre de référence, soit l'équivalent de quatre macroblocs de l'image précédente I(j-1). La position, dans cette fenêtre, du macrobloc de la fenêtre courante, est représentée en pointillés. Un vecteur de pixels P(-n,j-1), ..., P(m,j-1), pris en compte dans la fenêtre de référence, pour l'exécution de "m+1" séquences d'opérations, correspond à trois quart d'une ligne de cette fenêtre.

Par souci de clarté du présent mémoire, on ne s'intéressera qu'au traitement séquentiel relatif aux lignes de la fenêtre courante par rapport aux premiers vecteurs de la fenêtre de référence, le traitement relatif aux seconds vecteurs s'effectuant de la même manière par transposition d'indices.

Plus généralement, la présente invention se rapporte à un dispositif d'alimentation en opérandes de "n+1" opérateurs organisés en architecture systolique, du type exécutant "m+1" séquences de "n+1" opérations. Elle s'applique plus particulièrement à un dispositif mettant en oeuvre un processus opératoire pour lequel, au moins un des opérandes de chaque opérateur correspond à l'opérande utilisé par l'opérateur précédent au cours de la séquence précédente d'opérations.

Un objet de la présente invention est de proposer un dispositif d'alimentation de "n+1" opérateurs organisés en architecture systolique, du type décrit ci-dessus, qui permette de réduire le temps nécessaire à l'exécution des séquences d'opérations.

Pour atteindre cet objet, la présente invention prévoit un dispositif d'alimentation en opérandes de "n+1" opérateurs organisés en architecture systolique, du type exécutant "m+1" séquences de "n+1" opérations, comprenant :
"n+1" ante-registres associés aux opérateurs et destinés à stocker, pendant une exécution courante de "m+1" séquences d'opérations, les "n+1" premiers opérandes d'une exécution suivante de "m+1" séquences d'opérations ;
des moyens, associés à chaque opérateur, propres à sélectionner un opérande, entre la valeur contenue dans l'ante-registre associé à l'opérateur et la valeur d'un opérande utilisé par l'opérateur précédent lors d'une séquence précédente d'opérations ;
une première mémoire contenant un premier ensemble d'opérandes ;
une seconde mémoire contenant un second ensemble d'opérandes, un mot mémoire de la seconde mémoire contenant deux opérandes successifs ; et
une unité d'entrelacement des lectures dans la seconde mémoire, propre à sélectionner à chaque opération un des deux opérandes d'un mot mémoire de la seconde mémoire.

Selon un mode de réalisation de l'invention, le dispositif est intégré dans un circuit de compression d'images mobiles, du type réalisant une estimation de mouvement de portions d'une image courante sur la base de l'environnement de cette portion dans l'image précédente.

L'invention prévoit en outre un dispositif d'alimentation en pixels de "n+1" opérateurs d'un circuit de compression d'images mobiles, du type comportant, associé à chaque opérateur, un premier registre de travail alimenté par une première mémoire contenant une fenêtre courante d'une image courante, et un second registre de travail alimenté par la sortie du second registre associé à l'opérateur précédent, le second registre associé au premier opérateur étant alimenté par une seconde mémoire contenant une fenêtre de référence d'une image précédente, dispositif comportant, pour chaque opérateur, un ante-registre dont l'entrée est reliée à la sortie de l'ante-registre de l'opérateur précédent, et un multiplexeur dont la sortie est envoyée sur l'entrée du second registre de travail associé à l'opérateur, les entrées du multiplexeur étant respectivement reliées à la sortie de l'ante-registre et à la sortie du second registre de travail de l'opérateur précédent.

Selon un mode de réalisation de l'invention, la seconde mémoire est organisée de sorte que chaque mot mémoire contienne deux pixels successifs de la fenêtre de référence, et le dispositif comporte une unité d'entrelacement des lectures dans la seconde mémoire, propre à réaliser, à chaque cycle d'une horloge des registres, alternativement une lecture dans un vecteur courant de pixels et une lecture dans un vecteur suivant de pixels de la fenêtre de référence.

Selon un mode de réalisation de l'invention, l'unité d'entrelacement est constituée de deux multiplexeurs recevant chacun, sur une première entrée, un premier pixel d'un mot mémoire de la seconde mémoire, une seconde entrée de chaque multiplexeur étant reliée à la sortie d'un registre tampon qui reçoit, sur son entrée, la seconde valeur du mot mémoire lu dans la seconde mémoire.

Selon un mode de réalisation de l'invention, la première entrée du multiplexeur et l'entrée de l'ante-registre, associés au premier opérateur, reçoivent respectivement la sortie du premier multiplexeur et du second multiplexeur, constitutifs de l'unité d'entrelacement des lectures dans la seconde mémoire.

Selon un mode de réalisation de l'invention, chaque multiplexeur, associé à un opérateur, reçoit un signal de commande constitué d'un signal d'horloge présentant, par rapport au signal d'horloge des registres, une fréquence divisée par "m+1", la largeur des impulsions du signal d'horloge de ces multiplexeurs étant égale à une période du signal d'horloge des registres, et le signal d'horloge de ces multiplexeurs étant synchrone avec le signal d'horloge des registres.

Selon un mode de réalisation de l'invention, chaque multiplexeur de l'unité d'entrelacement reçoit un signal de commande constitué d'un signal d'horloge présentant, par rapport au signal d'horloge des registres, une fréquence divisée par deux, les deux signaux d'horloge de ces multiplexeurs étant en opposition de phase, en étant synchrones avec le signal d'horloge des registres.

Le fait, selon l'invention, d'associer à chaque opérateur un ante-registre, ou registre de préchargement, permet d'utiliser le temps nécessaire au traitement d'une ligne de pixels de la fenêtre courante pour précharger les premiers pixels d'un vecteur suivant de la fenêtre de référence qui seront nécessaires à la première séquence d'opération du traitement de la ligne suivante de la fenêtre courante. Ainsi, on élimine l'influence du temps de préchargement de ces pixels sur le temps de traitement global d'une ligne.

L'organisation réalisée, selon l'invention, de la seconde mémoire cache, et le recours à une unité d'entrelacement des lectures de cette mémoire, permet d'atteindre ce résultat, sans pour autant accroître le nombre de cycles de lecture des mémoires.

Ces objets, caractéristiques et avantages ainsi que d'autres de la présente invention seront exposés en détail dans la description suivante de modes de réalisation particuliers faite à titre non limitatif en relation avec les figures jointes parmi lesquelles :
les figures 1, 2, et 3, décrites précédemment, sont destinées à exposer l'état de la technique ainsi que le problème posé ;
la figure 4 représente, schématiquement, un mode de réalisation d'un dispositif d'alimentation d'une série d'opérateurs d'un circuit de compression d'images mobiles, selon l'invention ;
la figure 5 représente, sous forme de tableau, le contenu des registres du dispositif représenté à la figure 4 ; et
la figure 6 représente, sous forme de chronogrammes, un exemple de forme des signaux de commande des éléments du dispositif représenté à la figure 4.

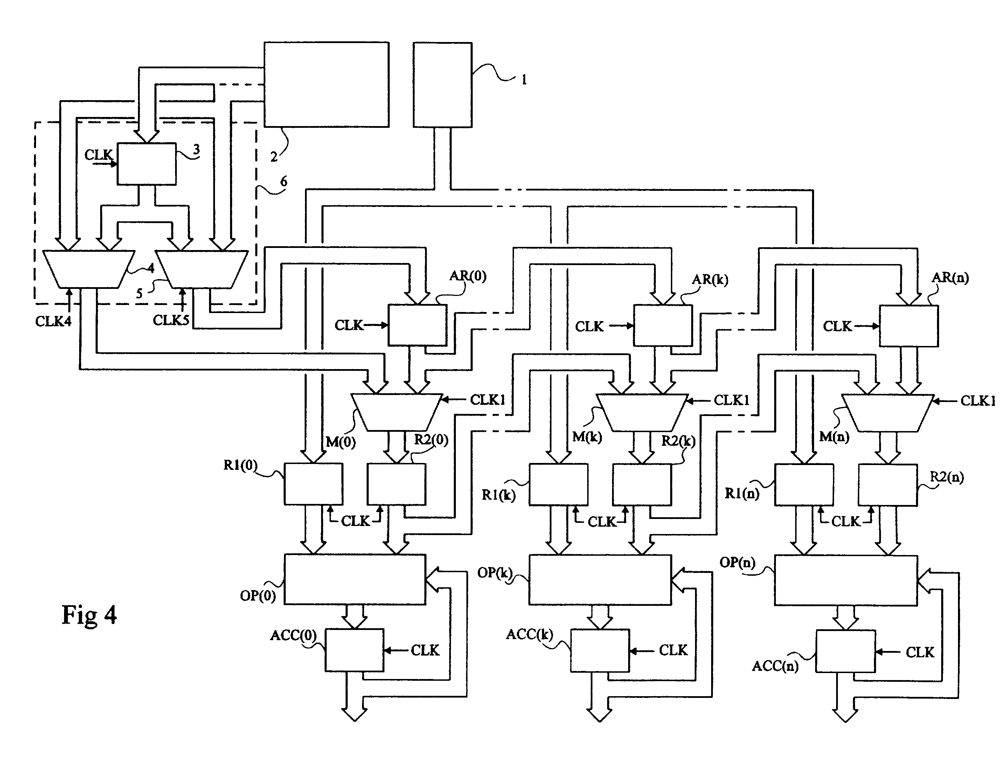

Le dispositif d'alimentation de "n+1" opérateurs OP(0), ..., OP(k), ..., OP(n) selon l'invention, tel que représenté à la figure 4, comporte une première mémoire cache 1 dans laquelle sont rangées, par exemple sur huit bits, les valeurs des pixels du macrobloc de l'image courante I(j) sur lequel va porter l'estimation de mouvement et qui constitue la fenêtre courante. La sortie de cette mémoire 1 est envoyée en parallèle sur des premiers registres de travail R1(0), ..., R1(k), .... R1(n) dont les sorties respectives sont reliées à une première entrée de l'opérateur auquel ils sont respectivement associés OP(0), ..., OP(k), ..., OP(n).

Une seconde mémoire cache 2 contient une fenêtre de référence de l'image précédente I(j-1). Cette fenêtre comprend les valeurs qu'avaient, dans l'image précédente, les pixels du macrobloc considéré de l'image courante I(j), ainsi que les valeurs des pixels voisins à ce macrobloc dans toutes les directions de l'image précédente I(j-1). Les mots mémoire de cette mémoire 2 contiennent les valeurs de deux pixels P(i,j-1) et P(i+1,j-1) successifs. Un mot mémoire est donc de seize bits, les huit bits de poids faible correspondant, par exemple, au pixel P(i,j-1), et les huit bits de poids fort, au pixel P(i+1,j-1). Les huit bits de poids faible de la sortie de la mémoire 2 sont envoyés sur une première entrée de deux multiplexeurs 4 et 5. Les huit bits de poids fort de la sortie de la mémoire 2 sont envoyés sur l'entrée d'un registre tampon 3, dont la sortie est reliée à une seconde entrée des deux multiplexeurs 4 et 5. Le registre tampon 3 et les multiplexeurs 4 et 5 constituent une unité d'entrelacement 6 des lectures effectuées dans la mémoire 2.

La sortie du premier multiplexeur 4 est reliée à une première entrée d'un multiplexeur M(0), associé à l'opérateur OP(0), et dont la seconde entrée est connectée à la sortie d'un registre de préchargement, ou ante-registre, AR(0). Cet ante-registre AR(0) reçoit la sortie du second multiplexeur 5 de l'unité d'entrelacement 6. La sortie du multiplexeur M(0) est reliée à l'entrée d'un second registre de travail R2(0), dont la sortie est envoyée sur une seconde entrée de l'opérateur OP(0).

Chaque opérateur OP(k) est, selon l'invention, associé à un multiplexeur M(k) et à un ante-registre AR(k). Une cellule élémentaire de rang "k" du circuit est ainsi constituée d'un opérateur OP(k), d'un multiplexeur M(k), de deux registres de travail R1(k) et R2(k), d'un ante-registre AR(k), et d'un accumulateur ACC(k). Les sorties des accumulateurs ACC(0), ..., ACC(k), ..., ACC(n) fournissent les résultats des opérations qui sont destinés à être utilisés par d'autres parties du circuit de compression d'images mobiles.

Pour une cellule élémentaire de rang "k", les trois entrées de l'opérateur OP(k) sont alimentées, respectivement par les sorties des registres de travail R1(k) et R2(k) et de l'accumulateur ACC(k), la sortie de l'opérateur OP(k) étant envoyée sur l'entrée de l'accumulateur ACC(k). Chaque opération élémentaire est ainsi effectuée sur la base du triplet de valeurs {P(i,j),P(i-k,j-1),ACC(i-1,k)}. L'entrée du registre de travail R1(k) reçoit le pixel P(i,j) extrait de la première mémoire 1. L'entrée du registre de travail R2(k) est reliée à la sortie du multiplexeur M(k), dont une première entrée est reliée à la sortie du registre de travail R2(k-1) associé à l'opérateur précédent OP(k-1). Une seconde entrée du multiplexeur M(k) est reliée à la sortie de l'ante-registre AR(k). L'entrée de l'ante-registre AR(k) est, quant à elle, connectée à la sortie de l'ante-registre AR(k-1) associé à l'opérateur précédent OP(k-1).

Tous les registres de travail R1(0), ..., R1(k), ..., R1(n), R2(0), ..., R2(k), ..., R2(n), et les ante-registres AR(0), ..., AR(k), ..., AR(n), ainsi que tous les accumulateurs ACC(0), ..., ACC(k), ..., ACC(n), et le registre tampon 3, sont pilotés par le même signal d'horloge CLK. Les multiplexeurs M(k) sont quant à eux pilotés par un même signal CLK1 indicateur d'une fin de ligne de la fenêtre courante. Les multiplexeurs 4 et 5 sont respectivement pilotés par des signaux CLK4 et CLK5.

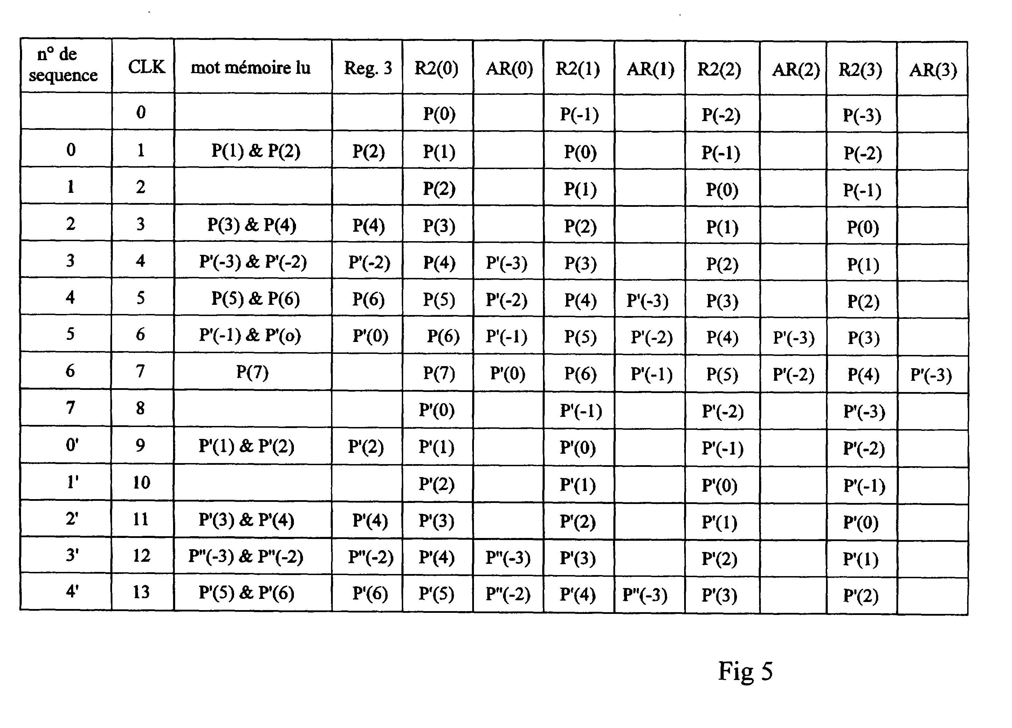

Le fonctionnement d'un tel dispositif est illustré par la figure 5. Cette figure représente sous forme de tableau, les valeurs présentes à l'entrée des seconds registres de travail R2(k) et des ante-registres AR(k), ainsi que la valeur présente à l'entrée du registre tampon 3 et le mot mémoire lu dans la mémoire cache 2, à chaque cycle d'horloge CLK. Le rang "i" de la séquence d'opération exécutée au cours du cycle d'horloge considéré est également indiqué.

Pour des raisons de clarté, on a considéré pour l'établissement de cette figure 5 que l'on exécutait huit séquences d'opérations au moyen de quatre opérateurs. En pratique, on exécute seize séquences d'opérations au moyen de huit opérateurs. Pour faciliter la compréhension, seules les valeurs de ces registres, qui sont significatives pour l'exécution des séquences d'opérations, ont été indiquées. Seul le rang "i" des pixels a été indiqué, tous les pixels qui interviennent sur cette figure étant des pixels de l'image I(j-1). Les valeurs présentes à l'entrée des premiers registres de travail R1(k) n'ont pas été indiquées, elles correspondent, comme précédemment, à la valeur du pixel de l'image courante I(j) présent à l'entrée du registre R2(0).

Comme le montre cette figure 5, les pixels P'(0), P'(-1), P'(-2), et P'(-3), représentant les pixels P'(0,j-1), ..., P'(-k,j-1),..., P'(-n,j-1) dont il faut disposer avant d'entamer le traitement sur un vecteur suivant de la fenêtre de référence, sont rangés dans les ante-registres AR(k) pendant le traitement du vecteur courant. La lecture des mots mémoire dans la mémoire cache 2, pour des pixels du vecteur courant, s'effectue tous les deux cycles d'horloge, deux pixels étant contenus dans un mot mémoire. La lecture des quatre pixels P'(0) à P'(-3) s'effectue également au cours d'un cycle d'horloge sur deux, en entrelacement avec les dernières lectures du vecteur courant. Ces pixels P'(0) à P'(-3) sont rangés dans les ante-registres AR(0) à AR(3). Au dernier cycle d'horloge du traitement du vecteur courant, le contenu de chaque ante-registre AR(k) est chargé dans le registre de travail R2(k) auquel il est associé, par l'intermédiaire du multiplexeur M(k). Comme on peut le constater, aucun cycle d'horloge supplémentaire n'est nécessaire, par rapport aux "m+1" cycles durant lesquels on exécute "m+1" séquences de "n+1" opérations, pour traiter un vecteur de la fenêtre de référence.

Dans le cas d'un circuit de compression d'images mobiles du type de celui décrit ci-dessus, cela revient à réduire d'un tiers la durée nécessaire à l'estimation de mouvement, seize cycles d'horloges étant désormais suffisant pour exécuter seize séquences de huit opérations alors qu'il en fallait précédemment vingt-quatre. Dans une mise en oeuvre de l'invention adaptée à un système de vidéophone, une fenêtre courante correspond à un macrobloc de 16x16 pixels et une fenêtre de référence correspond à une matrice carrée de 32x32 pixels.

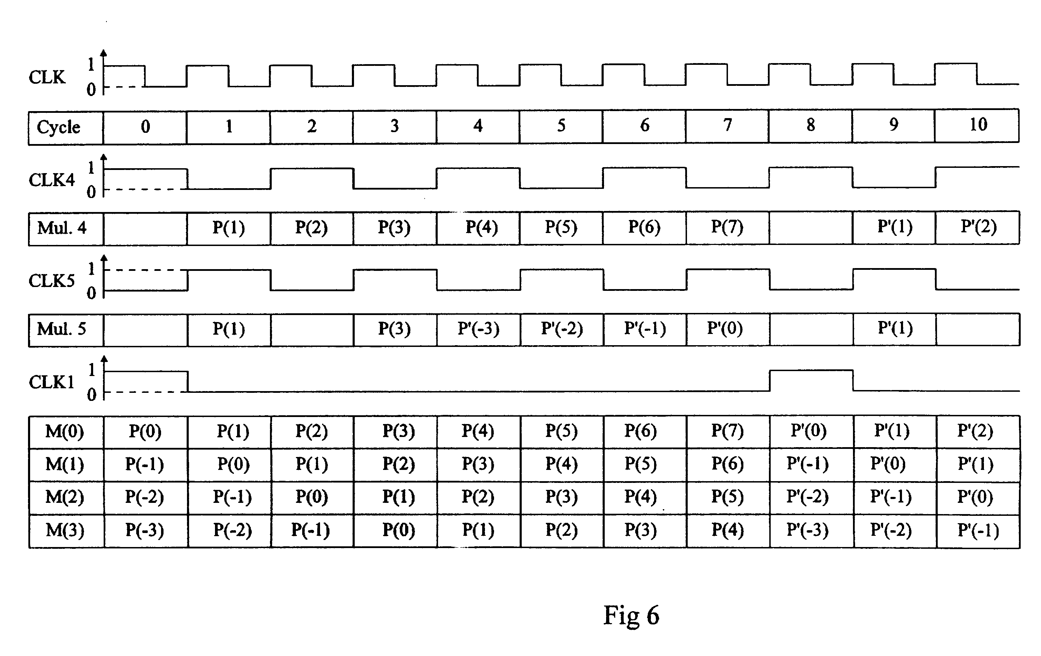

La figure 6 représente un exemple de la forme que peuvent prendre les signaux de commande CLK1, CLK4, CLK5 des multiplexeurs, par rapport au signal d'horloge CLK. On considère dans cet exemple que chaque multiplexeur sélectionne sa première entrée pour un niveau haut du signal de commande et sa seconde entrée pour un niveau bas. Sur cette même figure, ont également été indiqués les pixels présents à la sortie des multiplexeurs 4, 5, M(0), M(1), M(2), et M(3), pour chaque cycle d'horloge.

Comme on peut le constater, les signaux CLK4 et CLK5 correspondent en fait à des signaux d'horloges présentant une fréquence divisée par deux par rapport au signal d'horloge CLK. Les signaux CLK4 et CLK5 sont synchrones avec le signal CLK en étant déphasés l'un par rapport à l'autre de 180°. Le signal CLK1 présente quant à lui une fréquence divisée par "m+1" par rapport au signal d'horloge CLK, en étant synchrone avec ce dernier, la largeur de ses impulsions positives étant égale à une période du signal CLK. Les pixels P(1), P(3), et P'(1) présents à la sortie du multiplexeur 5, respectivement aux cycles "1", "3" et "9", constituent des valeurs non significatives à la sortie de ce multiplexeur. Elles proviennent de la lecture des mots mémoire respectifs {P(1),P(2)}, {P(3),P(4)}, {P'(1),P'(2)} qui constituent des valeurs significatives pour le multiplexeur 4. Dans le même ordre d'idée, la valeur P(8) présente à la sortie du multiplexeur 4 au cycle "8" constitue la seconde valeur du mot mémoire {P(7),P(8)} qui, bien que lue n'est pas utilisée. Le multiplexeur M(0) sélectionne en effet, au cours de ce cycle, sa première entrée qui reçoit la valeur P'(0).

Bien entendu, la présente invention est susceptible de diverses variantes et modifications qui apparaîtront à l'homme de l'art.

En particulier, n'importe quel type d'opérateur peut être utilisé en fonction de l'opération élémentaire devant être réalisée. On peut avoir recours, par exemple, à des comparateurs, additionneurs, soustracteurs, multiplieurs, ..., ou à toute combinaison d'opérateurs.

De même, chacun des composants décrits (registre tampon, ante-registre, multiplexeur), pourra être remplacé par un ou plusieurs éléments remplissant la même fonction. De plus, les valeurs devant subir les opérations peuvent correspondre à un nombre quelconque de bits, voire à un seul bit, en fonction du processus opératoire devant être mis en oeuvre.

En outre, bien que le dispositif ait été décrit en considérant qu'un seul des ensembles de valeurs faisait l'objet d'un entrelacement lors de son chargement, il peut tout aussi bien être mis en oeuvre pour un processus opératoire dans lequel plusieurs opérandes sont entrelacés.

## Revendications

1. Dispositif d'alimentation en opérandes de "n+1" opérateurs (OP(0), ..., OP(k), ..., OP(n)) organisés en architecture systolique, du type exécutant "m+1" séquences de "n+1" opérations, comprenant :
"n+1" ante-registres (AR(0), ..., AR(k), ..., AR(n)) associés aux opérateurs (OP(k)) et destinés à stocker, pendant une exécution courante de "m+1" séquences d'opérations, les "n+1" premiers opérandes d'une exécution suivante de "m+1" séquences d'opérations ;
des moyens (M(k)), associés à chaque opérateur (OP(k)), propres à sélectionner un opérande, entre la valeur contenue dans l'ante-registre (AR(k)) associé à l'opérateur (OP(k)) et la valeur d'un opérande utilisé par l'opérateur précédent (OP(k-1)) lors d'une séquence précédente d'opérations ;
une première mémoire (1) contenant un premier ensemble d'opérandes ;
une seconde mémoire (2) contenant un second ensemble d'opérandes, un mot mémoire de la seconde mémoire (2) contenant deux opérandes successifs ; et
une unité d'entrelacement (6) des lectures dans la seconde mémoire (2), propre à sélectionner à chaque opération un des deux opérandes d'un mot mémoire de la seconde mémoire (2).

2. Dispositif selon la revendication 1, caractérisé en ce qu'il est intégré dans un circuit de compression d'images mobiles, du type réalisant une estimation de mouvement de portions d'une image courante sur la base de l'environnement de cette portion dans l'image précédente.

3. Dispositif, selon la revendication 2, d'alimentation en pixels de "n+1" opérateurs (OP(0), ..., OP(k), ..., OP(n)) d'un circuit de compression d'images mobiles, du type comportant, associé à chaque opérateur (OP(k)), un premier registre de travail (R1(k)) alimenté par une première mémoire (1) contenant une fenêtre courante d'une image courante (I(j)), et un second registre de travail (R2(k)) alimenté par la sortie du second registre (R2(k-1)) associé à l'opérateur précédent (OP(k-1)), le second registre (R2(0)) associé au premier opérateur (OP(0)) étant alimenté par une seconde mémoire (2) contenant une fenêtre de référence d'une image précédente (I(j-1)), caractérisé en ce qu'il comporte, pour chaque opérateur (OP(k)), un ante-registre (AR(k)) dont l'entrée est reliée à la sortie de l'ante-registre (AR(k-1)) de l'opérateur précédent (OP(k-1)), et un multiplexeur (M(k)) dont la sortie est envoyée sur l'entrée du second registre de travail (R2(k)) associé à l'opérateur (OP(k)), les entrées du multiplexeur (M(k)) étant respectivement reliées à la sortie de l'ante-registre (AR(k)) et à la sortie du second registre de travail (R2(k-1)) de l'opérateur précédent (OP(k-1)).

4. Dispositif selon la revendication 3, caractérisé en ce que la seconde mémoire (2) est organisée de sorte que chaque mot mémoire contienne deux pixels (P(i,j-1),P(i+1,j-1)) successifs de la fenêtre de référence ; et en ce qu'il comporte une unité d'entrelacement (6) des lectures dans la seconde mémoire (2), propre à réaliser, à chaque cycle d'une horloge (CLK) des registres, alternativement une lecture dans un vecteur courant de pixels P(i,j-1) et une lecture dans un vecteur suivant de pixels P'(i,j-1) de la fenêtre de référence.

5. Dispositif selon la revendication 4, caractérisé en ce que l'unité d'entrelacement (6) est constituée de deux multiplexeurs (4, 5) recevant chacun, sur une première entrée, un premier pixel (P(i,j-1)) d'un mot mémoire de la seconde mémoire (2), une seconde entrée de chaque multiplexeur (4, 5) étant reliée à la sortie d'un registre tampon (3) qui reçoit, sur son entrée, la seconde valeur (P(i+1,j-1)) du mot mémoire lu dans la seconde mémoire (2).

6. Dispositif selon la revendication 5, caractérisé en ce que la première entrée du multiplexeur (M(0)) et l'entrée de l'ante-registre (AR(0)), associés au premier opérateur (OP(0)), reçoivent respectivement la sortie du premier multiplexeur (4) et du second multiplexeur (5), constitutifs de l'unité d'entrelacement (6) des lectures dans la seconde mémoire (2).

7. Dispositif selon l'une quelconque des revendications 4 à 6, caractérisé en ce que chaque multiplexeur (M(k)), associé à un opérateur (OP(k)), reçoit un signal de commande (CLK1) constitué d'un signal d'horloge présentant, par rapport au signal d'horloge (CLK) des registres, une fréquence divisée par "m+1" ; et en ce que la largeur des impulsions du signal d'horloge (CLK1) de ces multiplexeurs (M(k)) est égale à une période du signal d'horloge (CLK) des registres, le signal d'horloge (CLK1) de ces multiplexeurs (M(k)) étant synchrone avec le signal d'horloge (CLK) des registres.

8. Dispositif selon l'une quelconque des revendications 5 à 7, caractérisé en ce que chaque multiplexeur (4, 5) de l'unité d'entrelacement (6) reçoit un signal de commande (CLK4, CLK5) constitué d'un signal d'horloge présentant, par rapport au signal d'horloge (CLK) des registres, une fréquence divisée par deux ; et en ce que les deux signaux d'horloge (CLK4, CLK5) de ces multiplexeurs (4, 5) sont en opposition de phase, en étant synchrones avec le signal d'horloge (CLK) des registres.

## Patentansprüche

1. Vorrichtung zur Operandenzufuhr an in einer systolischen Architektur angeordnete 'n+1' Operatoren (OP(0), .... OP(k) ....OP(n)), des Typs, bei welchem 'm+1' Sequenzen von 'n+1' Operationen ausgeführt werden, wobei die Vorrichtung umfaßt:
den Operatoren (OP(k)) zugeordnete 'n+1' Ante-Register (AR(0), ...., AR(k), ...,AR(n)), welche jeweils während einer laufenden Ausführung von 'm+1' Operationssequenzen die 'n+1' ersten Operanden einer nachfolgenden Ausführung von 'm+1' Operationssequenzen speichern;
jeweils jedem Operator (OP(k)) zugeordnete Mittel (M(k)) zum Auswählen eines Operanden, zwischen dem Wert bzw. Betrag, der in dem dem Operator (OP(k)) zugeordneten Ante-Register (AR(k)) enthalten ist und dem Wert bzw. Betrag eines von dem vorhergehenden Operator (OP(k-1)) in einer vorhergehenden Operationssequenz verwendeten Operanden;
einen ersten Speicher (1), welcher einen ersten Satz bzw. Gruppe von Operanden enthält;
einen zweiten Speicher (2), welcher einen zweiten Satz bzw. Gruppe von Operanden enthält, wobei ein Speicherwort des zweiten Speichers (2) zwei aufeinderfolgende Operanden enthält; sowie
eine Einheit (6) zur Verflechtung bzw. Verschränkung der Ablesungen in dem zweiten Speicher, derart daß die Einheit jeweils bei jeder Operation einen der beiden Operanden eines Speicherworts des zweiten Speichers (2) auswählt.

2. Vorrichtung nach Anspruch 1, dadurch gekennzeichnet, daß sie in eine Kompressionsschaltung zur Kompression beweglicher Bilder des Typs integriert ist, bei welchem eine Bewegungsabschätzung von Teilen eines laufenden Bilds auf der Grundlage der Umgebung dieses Teils in dem vorhergehenden Bild erfolgt.

3. Vorrichtung nach Anspruch 2, zur Pixel-Zufuhr an 'n+1' Operatoren (OP(0), ...,OP(k), ..., (OP(n)) einer Schaltung zur Kompression beweglicher Bilder, des Typs, welcher jeweils in Zuordnung zu jedem Operator (OP(k)) ein erstes Arbeits-Register (R1(k)), das von einem ein laufendes Fenster eines laufenden Bilds (I(j)) enthaltenden ersten Speicher (1) gespeist wird, sowie ein zweites Arbeitsregister (R2(k)), das vom Ausgang des dem vorhergehenden Operator (OP(k-1)) zugeordneten zweiten Registers (R2(k-1)) gespeist wird, aufweist, wobei das dem ersten Operator (OP(0)) zugeordnete zweite Register (R2(0) von einem ein Bezugsfenster eines vorhergehenden Bildes (I(j-1)) enthaltenden zweiten Speicher (2) gespeist wird, dadurch gekennzeichnet, daß die Vorrichtung für jeden Operator (OP(k)) ein Ante-Register (AR(k)), dessen Eingang mit dem Ausgang des Ante-Registers (AR(k-1)) des vorhergehenden Operators (OP(k-1)) verbunden ist, sowie einen Multiplexer (M(k)) aufweist, dessen Ausgangsgröße dem Eingang des dem Operator (OP(k)) zugeordneten zweiten Arbeits-Registers (R2(K)) zugeführt wird, wobei die Eingänge des Multiplexers (M(k)) jeweils mit dem Ausgang des Ante-Registers (AR(k)) bzw. mit dem Ausgang des zweiten Arbeits-Registers (R2(k-1)) des vorhergehenden Operators (OP(k-1)) verbunden sind.

4. Vorrichtung nach Anspruch 3, dadurch gekennzeichnet, daß der zweite Speicher (2) so organisiert ist, daß jeweils jedes Speicherwort zwei aufeinanderfolgende Pixel (P(i,j-1), P(i+1,j-1) des Bezugsfensters enthält; und daß sie eine Einheit (6) zur Verflechtung bzw. Verschachtelung der Ablesungen des zweiten Speichers (2) in solcher Ausbildung aufweist, daß sie jeweils in jeder Taktperiode (CLK) Pixel (P(i,j-1)) von einem laufenden Vektor und Pixel (P'(i,j-1)) des Bezugsfensters von dem nächsten Vektor liest.

5. Vorrichtung nach Anspruch 4, dadurch gekennzeichnet, daß die Verflechtungs- bzw. Verschachtelungs- oder Verschränkungseinheit (6) von zwei Multiplexern (4,5) gebildet wird, die jeweils jede an einem ersten Eingang ein erstes Pixel (P(i,j-1)) eines Speicherworts des zweiten Speichers (2) zugeführt erhält, während ein zweiter Eingang jedes Multiplexers (4,5) jeweils mit dem Ausgang eines Puffer-Registers (3) verbunden ist, das an seinem Eingang den zweiten Wert bzw. Betrag (P(i+1,j-1)) des aus dem zweiten Speicher (2) ausgelesenen Speicherworts zugeführt erhält.

6. Vorrichtung nach Anspruch 5, dadurch gekennzeichnet, daß dem ersten Eingang des dem ersten Operator (OP(0)) zugeordneten Multiplexer (M(0)) und dem Eingang des ebenfalls dem ersten Operator (OP(0) zugeordneten Ante-Registers (AR(0)) jeweils die Ausgangsgröße des ersten Multiplexers (4) bzw. des zweiten Multiplexers (5), welche die Einheit (6) zur Verflechtung bzw. Verschränkung der Ablesungen aus dem zweiten Speicher (2) bilden, zugeführt werden.

7. Vorrichtung nach einem der Ansprüche 4 bis 6, dadurch gekennzeichnet, daß jedem jeweils einem Operator (OP(k)) zugeordneten Multiplexer (M(k)) jeweils ein Steuersignal (CLK1) zugeführt wird (CLK1), das aus einem Taktsignal besteht, welches bezüglich dem Taktsignal (CLK) der Register eine durch 'm+1' geteilte Frequenz besitzt; und daß die Breite der Impulse des Taktsignals (CLK1) dieser Multiplexer (M(k)) gleich einer Periode des Taktsignals (CLK) der Register ist, wobei das Taktsignal (CLK1) dieser Multiplexer (M(k)) synchron mit dem Taktsignal (CLK) der Register ist.

8. Vorrichtung nach einem der Ansprüche 5 bis 7, dadurch gekennzeichnet, daß jedem Multiplexer (4,5) der Verflechtungs-bzw. Verschränkungseinheit (6) jeweils ein Steuersignal (CLK4, CLK5) zugeführt wird, das aus einem Taktsignal besteht, welches bezüglich dem Taktsignal (CLK) der Register eine durch zwei geteilte Frequenz besitzt; und daß die beiden Taktsignale (CLK4; CLKS) dieser Multiplexer (4,5) in Gegenphase zueinander stehen und synchron mit dem Taktsignal (CLK) der Register sind.

## Claims

1. A device for supplying operands to "n+1" operators (OP(0) ..., OP(k) ..., OP(n)), disposed in a systolic architecture, of the type processing "m+1" sequences of "n+1" operations, including
"n+1" ante-registers (AR(0), ..., AR(k), ..., AR(n)) associated with the operators (OP(k)) and designed to store, during a current processing of "m+1" sequences, the first "n+1" operands of a next operation of "m+1" sequences of operations;
means (M(k)) associated with each operator (OP(k)) and adapted to select an operand, between the value contained in the ante-register (AR(k)) associated with the operator (OP(k)) and the value of an operand used by the preceding operator (OP(k-1)) during a preceding sequence of operations;
a first memory (1) storing a first set of operands;
a second memory (2) storing a second set of operands, a memory word of the second memory (2) storing two successive operands; and
a unit (6) for interlacing the readings of the second memory (2), and adapted to select at each operation one of the two operands of a memory word of the second memory (2).

2. The device of claim 1, characterized in that it is integrated in a motion picture compression circuit of the type executing a motion estimation of portions of a current picture, taking into account the environment of said portion in the preceding picture.

3. The device of claim 2, supplying pixels to "n+1" operators (OP(0), ..., OP(k) ..., OP(n)) of a motion picture compression circuit, of the type including, associated with each operator (OP(k)), a first work register (R1(k)) supplied by a first memory (1) storing a current window of a current picture (I(j)), and a second work register (R2(k)) supplied by the output of the second register (R2(k-1)) associated with the preceding operator (OP(k-1)), the second register (R2(0)) associated with the first operator (OP(0)) being supplied by a second memory (2) storing a reference window of a preceding picture (I(j-1)), characterized in that it includes, for each operator (OP(k)), an ante-register (AR(k)) having its input con-nected to the output of the ante-register (AR(k-1)) of the preceding operator (OP(k-1)), and a multiplexer (M(k)) having its output connected to the input of the second work register (R2(k)) associated with the operator (OP(k)), the inputs of said multiplexer (M(k)) being respectively connected to the output of the ante-register (AR(k)) and to the output of the second work register (R2(k-1)) of the preceding operator (OP(k-1)).

4. The device of claim 3, characterized in that the second memory (2) is arranged so that each memory word contains two successive pixels (P(i,j-1), P(i+1,j-1)) of the reference window; and in that it includes a unit (6) for interlacing the readings of the second memory (2) and adapted to alternatively read, at each clock period (CLK), pixels (P(i,j-1)) from a current vector and pixels (P'(i,j-1)) of the reference window from the next vector.

5. The device of claim 4, characterized in that the interlacing unit (6) includes two multiplexers (4, 5), each receiving, at a first input, a first pixel (P(i,j-1)) of a memory word of the second memory (2), a second input of each multiplexer (4, 5) being connected to the output of a buffer register (3) which receives the second value (P(i+1,j-1)) of the memory word read out of the second memory (2).

6. The device of claim 5, characterized in that the first input of the multiplexer (M(0)) and the input of the ante-register (AR(0)), both associated with the first operator (OP(0)), respectively receive the output of the first multiplexer (4) and of the second multiplexer (5) constituting the interlacing unit (6) of the readings in the second memory (2).

7. The device of any of claims 4 to 6, characterized in that each multiplexer (M(k)), associated with an operator (OP(k)), receives a control signal (CLK1) constituted by a clock signal having, with respect to the clock signal (CLK) of the registers, a frequency divided by "m+1"; and in that the width of the clock signal pulses (CLK1) of said multiplexers (M(K)) is equal to one period of the clock signal (CLK) of the registers, the clock signal (CLK1) of said multiplexers (M(K)) being synchronized with the clock signal (CLK) of the registers.

8. The device of any of claims 5 to 7, characterized in that each multiplexer (4, 5) of the interlacing unit (6) receives a control signal (CLK4, CLK5) constituted by a clock signal having, with respect to the clock signal (CLK) of the registers, a frequency divided by 2; and in that the phase of the two clock signals (CLK4, CLK5) of said multiplexers (4, 5) are in opposition while being synchronized with the clock signal (CLK) of the registers.
